# EUROPEAN PATENT SPECIFICATION

(11) **EP 0 535 593 B1**
(45) Date of publication and mention of the grant of the patent: **31.07.1996**
(21) Application number: 92116643.5
(22) Date of filing: 29.09.1992
(51) Int. Cl.: C22C 1/04, B22F 3/10

(54) **Method of manufacturing sintered aluminum alloy parts**
Verfahren zur Herstellung von gesinterten Körpern aus einer Aluminium-Legierung
Procédé pour la fabrication d'articles frittés en alliage d'aluminium

(30) Priority: 01.10.1991 JP 252676/91
(43) Date of publication of application: 07.04.1993
(73) Proprietor: HITACHI, LTD., Chiyoda-ku, Tokyo 101 (JP); HITACHI POWDERED METALS CO., LTD., Matsudo-shi, Chiba 271 (JP)
(72) Inventor: Kamitsuma, Yasuo, Mito-shi, Ibaraki 311-41 (JP); Nakagawa, Yusaku, Hitachi-shi, Ibaraki 319-14 (JP); Kobayashi, Yosihiro, Hitachi-shi, Ibaraki 316 (JP); Nakashima, Shoichi, Hitachi-shi, Ibaraki 316 (JP); Iizuka, Tadashi, Ashikaga-shi, Tochigi 326-03 (JP); Nakamura, Keiichi, Tokyo 174 (JP); Shikata, Hideo, Matsudo-shi, Chiba 270 (JP)
(74) Representative: Beetz & Partner Patentanwälte

(56) References cited:
- EP-A- 0 112 787
- EP-A- 0 147 769
- EP-A- 0 254 698
- EP-A- 0 265 307
- US-A- 3 432 296
- US-A- 4 435 213
- PATENT ABSTRACTS OF JAPAN vol. 12, no. 197 (M-706)8 June 1988 & JP-A-63 004 002 ( SUMITOMO ELECTRIC IND ) * abstract *

## Description

### Background of the Invention

### 1. Field of the Invention

The present invention relates to a method of manufacturing sintered aluminum alloy parts using Al-Si series alloy powder as a raw material and, in particular, relates to a method of manufacturing sintered aluminum alloy parts incorporating an improved sintering method.

### 2. Description of Related Art

As examples of ferrous series metal materials such as cast iron and sintered iron were known as the material such as for scroll shaped revolving and stationary parts in a scroll type compressor. Further, as examples of non-ferrous series metal materials aluminum alloy (for example Al-Si alloy) as a light weight material was used and casting and die-casting methods were known therefor. Still further JP-A-62-96603 (1987) discloses a method of manufacturing sintered Al alloy parts.

JP-A-64-56806 (1989) discloses a manufacturing of scroll shaped parts wherein an Al alloy powder solidified via rapid cooling which is obtained by a gas atomizing method after melting an Al alloy is used, and after compression molding, in other words compacting, the Al alloy powder, the scroll shaped parts are manufactured via a hot extrusion, a hot forging after a hot extrusion or a hot forging. The Al-Si powder wherein Si is added to Al shows an advantage of reducing the thermal expansion coefficient of the product, however during the heating process at a high temperature the Al-Si powder is vigorously oxidized which extremely deteriorates the workability of the product so that such oxidation has to be prevented.

US-A-4 435 213 discloses a method for producing aluminum powder alloy products having improved strength properties by compacting and shaping the alloy powder into a useful article including heating the compact rapidly by induction heating techniques, which products may be subsequently shaped by forging, extruding or rolling processes. Said aluminum alloy may be selected from the group consisting of (a) Al-Zn-Mg alloys containing 3-14 % Zn and 0.5-4.5 % Mg with optional contents of up to 3 % Cu, up to 3 % Fe, up to 0.5 % Si and up to 2 % Zr, (b) Al-Cu alloys containing 1-8 % Cu with optional contents of up to 5 % Mg, up to 5 % Fe, up to 2 % Si, up to 5 % Mn and up to 2 % Zr, (c) Al-Mg alloys containing 1-8 % Mg with optional contents of up to 2 % Cu, up to 3 % Fe, up to 2 % Si, up to 5 % Mn and up to 2 % Zr, (d) Al-Fe alloys containing 0.5-15 % Fe with optional contents of up to 5 % Mg, up to 10 % Cu, up to 15 % Si, up to 5 % Mn and up to 5 % Zr, (e) Al-Mn alloys containing 0.5-15 % Mn with optional contents of up to 3 % Mg, upt to 3 % Cu, up to 7 % Fe, up to 10 % Si and up to 3 % Zr, and (f) Al-Si alloys containing 1-30 % Si with optional contents of up to 5 % Zn, up to 5 % Mg, up to 5 % Cu, up to 5 % Fe, up to 10 % Mn, and up to 2 % Zr, said alloys (a) - (f) containing optionally also up to 2 % Ce.

As explained above, when parts having a complex shape such as the scroll shaped parts were manufactured such as by processings of the hot forging and the extrusion after compression molding the alloy powder obtained by adding an effective element such as Si to the powder solidified via rapid cooling of the Al alloy according to the conventional method, the working of the product was rendered difficult because of the embrittlement thereof due to the oxidation at a high temperature, therefore a long manufacturing time was required therefor, further there were problems with regard to the mechanical strength and toughness of the product, still further there was a drawback that the product thus manufactured raised the production cost.

### Summary of the Invention

An object of the present invention is to provide a method of manufacturing sintered Al alloy parts of a light weight, an excellent mechanical strength and toughness having a complex shape wherein a high Si-Al alloy powder is used and a manufacturing process which produces a high density Al alloy sintered body is introduced.

The method of manufacturing sintered aluminum alloy parts according to the present invention for solving the above problems is as claimed, in claim 1. Advantageous further features thereof are claimed in claims 2 to 4.

It is, for example, necessary to reduce the clearance between the scroll shaped revolving and stationary parts for enhancing the performance of a scroll type compressor. For this purpose, the sintered Al alloy has to have a small thermal expansion coefficient comparable to that of a cast iron which has been used long, and the thermal deformation thereof also has to be limited as small as possible. When a reduction of thermal expansion coefficient of the product is only required, it would be enough to add, for example, Si of 1∼45wt% to Al powder, however in order to provide a hot workability, an age hardening property, a high mechanical strength and toughness at a high temperature it is necessary to add optimum amounts of effective components such as Cu, Mn and Fe.

Namely, in the present invention, when the amount of Si is less than 1wt% a sufficient mechanical strength and wear and abrasion resistance of the resultant product can not be obtained, on the other hand, when the amount of Si exceeds 45wt% the ductility thereof reduces such that the amount of Si is determined between 1-45wt% (preferably 12.2-25wt%). In order to increase mechanical strength of the resultant product the alloy further incorporates Cu 1 - 5wt%, Fe 0.1 - 1.0wt%, Mn 0.1 - 2wt%, Mg 0.1 - 1wt%, Zr 0.5 - 5wt% and Ce 0.5 - 5wt%.

Further, it was found out that a reduction of mechanical strength after sintering Al alloy powder is caused by weakening the coupling force between particles because of remaining oxidized films on the surfaces of the powder particles. Accordingly, in order to increase the coupling force between particles it was found out that an addition of Ce and Zr which serves as a deoxidizing component for the alloy powder was effective, therefore these components of a proper amount are added.

After compression molding the Al alloy powder, the molded body is pressed by a low pressure and an electric current is conducted therethrough to cause a plasma discharge between the pressed powder particles so as to remove the oxidized films. In this instance, the most optimum plasma discharge is generated at a plasma voltage of 2-10V and a plasma current of 1000-6500A, and the applied pressure upon the molded body is adjusted while causing discharge of the adsorbed gas on the particle surfaces. The plasma discharge of the present invention is carried out in the atmosphere.

After completing the gas discharge, the molded body is further pressed to produce a sintered body in which the particles are firmly coupled. In order to obtain a sintered body having a high density, the pressure applied to the molded body and the total sintering time are respectively selected in the ranges 500 - 3000 N/cm² (50 - 300Kgf/cm²) and of 5 - 20 minutes.

The sintered alloy product manufactured according to the present invention has a high density as well as an excellent mechanical strength and toughness and the manufacturing method is suitable for manufacturing parts of light weight and small size and of a complex configuration such as a scroll shaped parts for a scroll type compressor.

### Brief Explanation of the Drawings

Fig.1 is a schematic diagram of manufacturing processes of a scroll shaped part of one embodiment according to the present invention ;
Fig.2 is a diagram showing a relationship between plasma sinter processing time and the density ratio of the above embodiment ;
Fig.3 is a diagram showing a relationship between applied pressure during sintering and the density ratio of the above embodiment ;
Fig.4 is a diagram showing a relationship between plasma current and the density ratio of the above embodiment ;
Fig.5 is a diagram showing a relationship between plasma voltage and the density ratio of the above embodiment ;
Fig.6 is a diagram showing a relationship between plasma sinter processing time and tensile strength of the above embodiment ; and
Fig.7 is a schematic diagram of manufacturing processes of a scroll shaped part of another embodiment according to the present invention.

### Description of the Embodiments

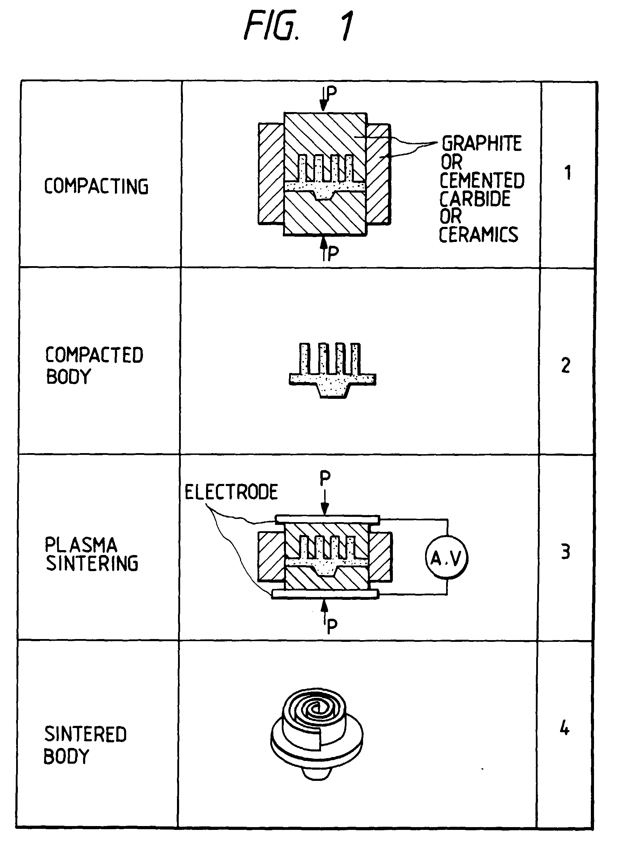

Hereinbelow, embodiments according to the present invention and the experimental results thereof are explained with reference to Fig.1 - Fig.7.

Fig.1 is a schematic diagram for explaining the manufacturing processes of a scroll shaped part of one embodiment according to the present invention.

In Fig.1, 1 is a compacting process, 2 is a compacted body, 3 is a plasma sintering process and 4 is a sintered body.

An Al alloy powder having a composition of Si 25wt%, Cu 3.5wt%, Mg 0.5wt%, Fe 0.5wt%, Mn 0.5wt%, Zr 1.0wt%, Ce 2.0wt% and balance Al was used, the Al alloy powder was melted and thereafter air-atomized wherein the diameter of the particles was controlled to be less than 500 µm.

At first, in the compacting process, the Al alloy powder was compacted by making use of a graphite die to produce the compacted body 2, and the compacted body 2 was inserted into a graphite die having the same configuration as the scroll shaped part and pressed upto an applied pressure of 2000 N/cm² (200Kgf/cm²) while causing a plasma discharge therein at plasma current of 5000A and plasma voltage of 5V to obtain the sintered body 4. The resultant sintered body was 85 mnΦ x 40 mn thickness in a scroll shape.

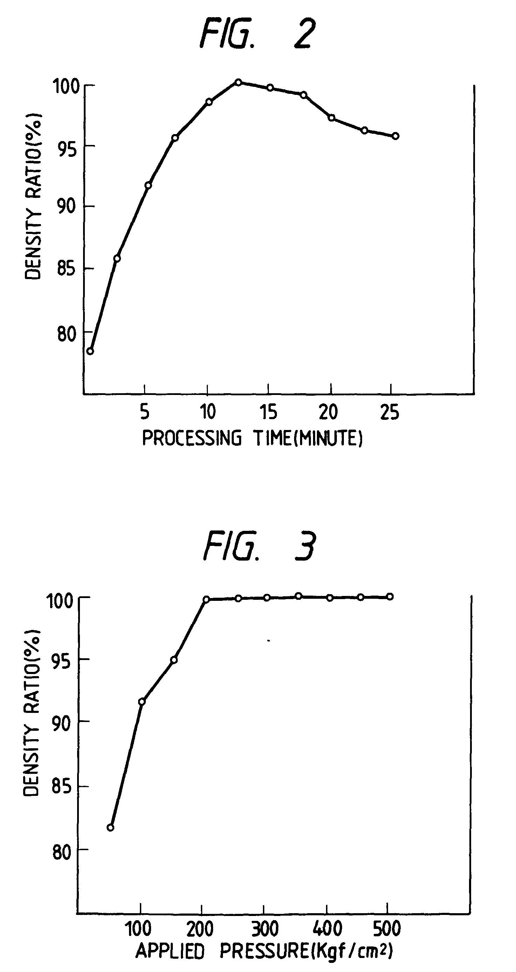

Fig.2 is a diagram showing a relationship between plasma sinter processing time and the density ratio of the resultant body in the above process. It will be seen from the diagram that the optimum holding time is 12 minutes and when the holding time is more than 5 minutes a density ratio of 90% is obtained.

Fig.3 is a diagram showing a relationship between applied pressure during sintering and the density ratio of the resultant body. When the plasma sinter processing time of 12 minutes, the plasma current of 5000A and the plasma voltage of 5V are selected, a density ratio of more than 90% is obtained at the applied pressure of 1000 N/cm² (100Kgf/cm²) and the optimum applied pressure under the same condition is 2000 N/m² (200Kgf/cm²).

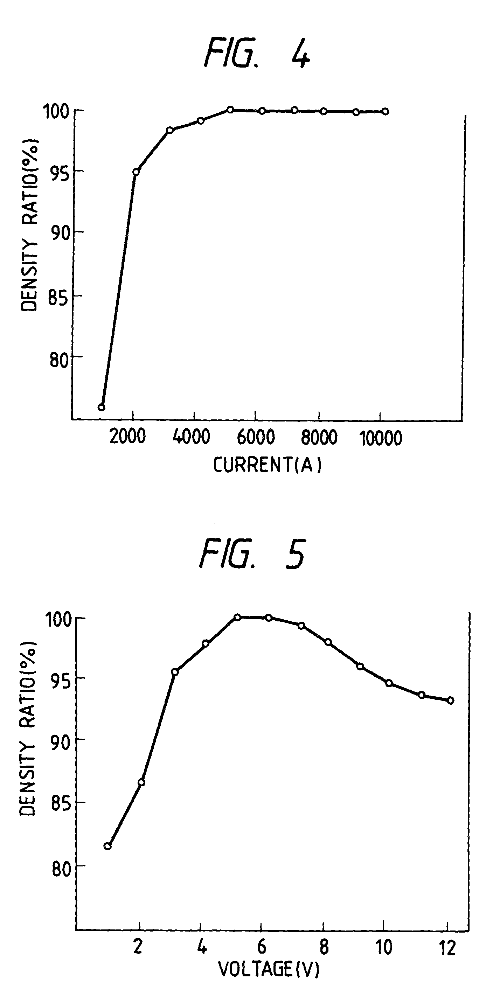

Fig.4 is a diagram showing a relationship between plasma current and the density ratio of the resultant body. When the plasma sinter processing time of 12 minutes, plasma voltage of 5V and the applied pressure of 2000N/cm² (200Kgf/cm²) are selected, the optimum plasma current is 5000A and a density ratio of more than 90% is obtained by a plasma current of more than 1500A.

Fig.5 is a diagram showing a relationship between plasma voltage and the density ratio of the resultant body. When the plasma sinter processing time of 12 minutes, the plasma current of 5000A and the applied pressure of 2000N/cm² (200Kgf/cm²) are maintained, the optimum plasma voltage is 5V and a density ratio of more than 90% can be obtained by a plasma voltage of more than 3V.

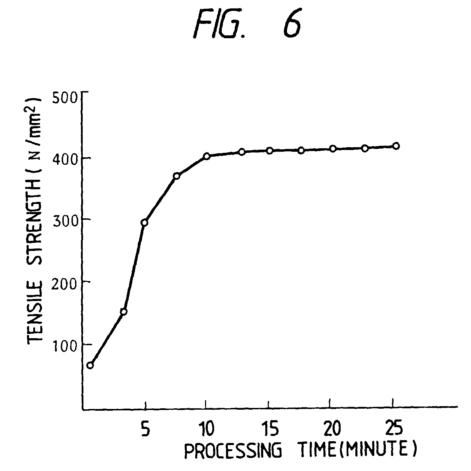

Fig.6 is a diagram showing a relationship between plasma sinter processing time and tensile strength of the resultant body. When the plasma current of 5000A, the plasma voltage of 5V and the applied pressure of 2000N/cm² (200Kgf/cm²) are maintained, the tensile strength of 160N/mm² (16Kg/mm²) is obtained at the plasma sinter processing time of 5 minutes and a sufficient tensile strength of 400N/mm² (40Kg/mm²) is obtained at the optimum plasma sinter processing time of 12 minutes. It was confirmed based on a micro structure photograph (illustration of which is omitted) of the resultant body that the boundary surface between the powder particles was closely coupled to maintain a sufficient mechanical strength.

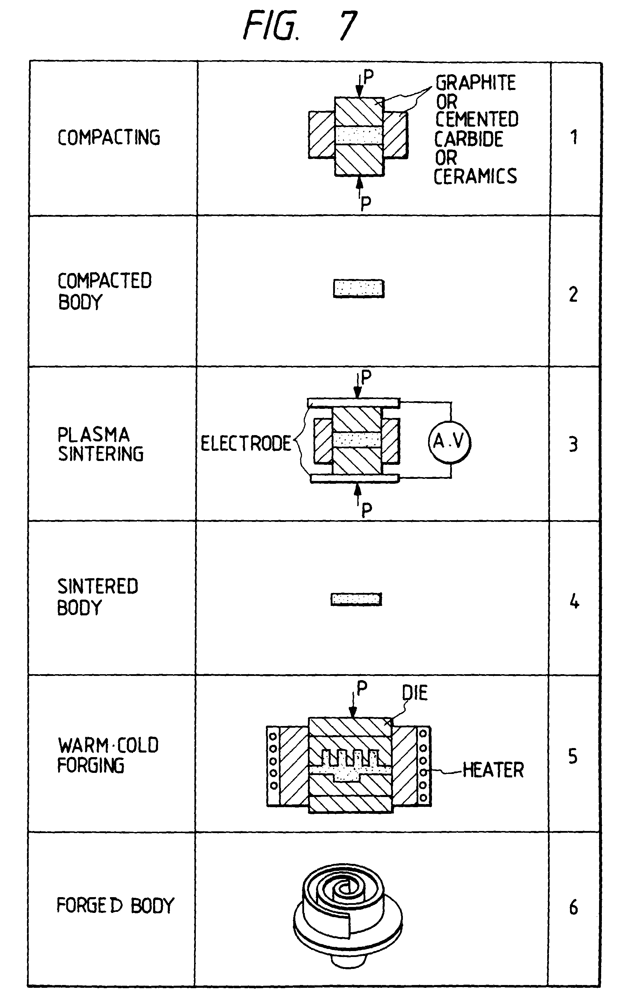

Fig.7 is a schematic diagram for explaining a manufacturing process of a scroll shaped part of another embodiment according to the present invention. In Fig.7, 5 shows a warm cold forging process and 6 is a forged body. The other numerals indicate the same process steps and elements as in Fig.1. In the present embodiment, the sintered body 4 of a flat plate which was manufactured via the compacting process 1 and the plasma sintering product 3 was subjected to the warm or cold forging process 5 to produce the forged body 6 of the scroll shaped part. Via the present method, the sintered body is subjected to a plastic working to thereby disappear internal defects therein and to further enhance the mechanical strength.

In the above embodiments, the manufacture of scroll shaped parts is explained, however the present invention is of course applicable to Al alloy sintered parts having other complex shapes.

According to the present invention, parts having complex configurations made of sintered Al-Si series alloy having light weight, excellent mechanical strength and toughness are easily obtained, and since the plasma sintering method is employed such as a vacuum installation is dispensed with, the production cost thereof is reduced because of the reduced installation cost and the production efficiency is enhanced because the molded body can be sintered in a short time.

## Claims

1. A method of manufacturing sintered aluminum alloy parts comprising the steps of:
compression molding an Al alloy powder which consists of Si 1-45 wt%, Ce 0.5-5 wt%, Zr 0.5-5 wt%, Cu 1-5 wt%, Fe 0,1-1.0 wt%, Mn 0.1-2 wt%, Mg 0.1-1 wt% and balance Al and unavoidable impurities, and has been solidified via rapid cooling; and
thereafter sintering the compression molded alloy powder by heating via an electric current conduction therethrough in a form of a plasma discharge while applying pressure thereto.

2. A method of manufacturing sintered aluminum alloy parts according to claim 1, characterized in that the Al alloy powder consists of Si 25 wt%, Ce 2.0 wt%, Zr 1.0 wt %, Cu 3.5 wt%, Mg 0.5 wt%, Fe 0.5 wt%, Mn 0.5 wt% and balance Al and unavoidable impurities.

3. A method of manufacturing sintered aluminum alloy parts according to claim 1, characterized by further comprising the step of
forging the sintered body via one of warm forging or cold forging to obtain a forged body of a complex configuration.

4. A method of manufacturing sintered aluminum alloy parts according to one of claims 1 through 3,
characterized in that the sintering conditions with the plasma discharge are a plasma voltage of 2-10 V, a plasma current of 1000-6500 A, a sintering pressure of 500-3000 N/cm² (50-300 Kgf/cm²) and a sintering time of 5-20 minutes.

## Patentansprüche

1. Verfahren zur Herstellung gesinterter Aluminiumlegierungsteile, das die Schritte aufweist:
Druckformen eines Al-Legierungspulvers, das aus 1 - 45 Gew.% Si, 0,5 - 5 Gew.% Ce, 0,5 - 5 Gew.% Zr, 1 - 5 Gew.% Cu, 0,1 - 1 Gew.% Fe, 0,1 - 2 Gew.% Mn, 0,1 - 1 Gew.% Mg und Rest Al und unvermeidlichen Verunreinigungen besteht und durch rasches Abkühlen erstarrt wurde; und
danach Sintern des druckgeformten Legierungspulvers durch Erhitzen mittels Durchleitens eines elektrischen Stroms in einer Form einer Plasmaentladung unter Druckeinwirkung darauf.

2. Verfahren zur Herstellung gesinterter Aluminiumlegierungsteile nach Anspruch 1,
dadurch gekennzeichnet, daß das Al-Legierungspulver aus 25 Gew.% Si, 2,0 Gew.% Ce, 1,0 Gew.% Zr, 3,5 Gew.% Cu, 0,5 Gew.% Mg, 0,5 Gew.% Fe, 0,5 Gew.% Mn und Rest Al und unvermeidlichen Verunreinigungen besteht.

3. Verfahren zur Herstellung gesinterter Aluminiumlegierungsteile nach Anspruch 1,
dadurch gekennzeichnet, daß es außerdem den Schritt aufweist:
Schmieden des gesinterten Körpers durch Warmschmieden oder Kaltschmieden zum Erhalten eines geschmiedeten Körpers komplizierter Gestaltung.

4. Verfahren zur Herstellung gesinterter Aluminiumlegierungsteile nach einem der Ansprüche 1 - 3,
dadurch gekennzeichnet, daß die Sinterbedingungen mit der Plasmaentladung eine Plasmaspannung von 2 - 10 V, ein Plasmastrom von 1000 bis 6500 A, ein Sinterdruck von 500 - 3000 N/cm² (50 - 300 kgf/cm²) und eine Sinterdauer von 5 - 20 Minuten sind.

## Revendications

1. Procédé pour fabriquer des pièces frittées en alliage d'aluminium comprenant les étapes consistant à :
mouler par compression une poudre d'alliage de Al, qui est constituée de 1-45 % en poids de Si, 0,5-5 % en poids de Ce, 0,5-5 % en poids de Zr, 1-5 % en poids de Cu, 0,1-1,0 % en poids de Fe, 0,1-2 % en poids de Mn, O,1-1% en poids de Mg, le reste étant formé de Al et d'impuretés inévitables, et a été solidifiée au moyen d'un refroidissement rapide, et
fritter ensuite la poudre d'alliage moulée par compression par chauffage au moyen d'une conduction de courant électrique dans cette poudre sous la forme d'une décharge de plasma tout en lui appliquant une pression.

2. Procédé pour fabriquer des pièces frittées en alliage d'aluminium selon la revendication 1, caractérisé en ce que la poudre d'alliage de Al comprend 25 % en poids de Si, 2,0 % en poids de Ce, 1,0 % en poids de Zr, 3,5 % en poids de Cu, 0,5 % en poids de Mg, 0,5 % en poids de Fe, 0,5 % en poids de Mn, le reste étant formé de Al et d'impuretés inévitables.

3. Procédé pour fabriquer des pièces frittées en alliage d'aluminium selon la revendication 1, caractérisé en ce qu'il comporte en outre l'étape consistant à
forger le corps fritté au moyen d'un forgeage à chaud ou d'un forgeage à froid pour obtenir un corps forgé ayant une configuration complexe.

4. Procédé pour fabriquer des pièces frittées en alliage d'aluminium selon l'une des revendications 1 à 3, caractérisé en ce que les conditions de frittage avec la décharge de plasma sont une tension de plasma de 2-10 V, un courant de plasma de 1000-6500 A, une pression de frittage de 500-3000 N/cm2 (50-300 kgl/cm2) et un temps de frittage de 5-20 minutes.
